# EUROPÄISCHE PATENTSCHRIFT

(11) **EP 3 377 796 B1**
(45) Veröffentlichungstag und Bekanntmachung des Hinweises auf die Patenterteilung: **26.01.2022**
(21) Anmeldenummer: 16795043.5
(22) Anmeldetag: 14.11.2016
(51) Int. Cl.: F16L 37/23, F16L 37/34

(54) **KUPPLUNGSELEMENT FÜR EINE KUPPLUNG ZUR VERBINDUNG VON DRUCKMITTELLEITUNGEN**
COUPLING ELEMENT FOR A COUPLING FOR CONNECTING PRESSURE MEDIUM LINES
ÉLÉMENT DE RACCORD POUR UN RACCORD DESTINÉ À RELIER DES CONDUITES DE FLUIDE SOUS PRESSION

(30) Priorität: 17.11.2015 DE 102015222640
(43) Veröffentlichungstag der Anmeldung: 26.09.2018
(73) Patentinhaber: U.M. Gewerbeimmobilien GmbH & Co. KG, 58791 Werdohl (DE)
(72) Erfinder: LAUFER, Klaus, 58540 Meinerzhagen (DE); GINCZEK, Christoph, 51709 Marienheide (DE)
(74) Vertreter: Patentanwälte Dörner & Kötter PartG mbB
(86) Internationale Anmeldenummer: PCT/EP2016/077528
(87) Internationale Veröffentlichungsnummer: WO 2017/084992

(56) Entgegenhaltungen:
- EP-A1- 2 148 122
- DE-A1-102010 019 094
- DE-U1- 8 809 220
- US-A- 5 709 243
- US-A1- 2004 079 423
- US-A1- 2010 327 574

## Beschreibung

Die Erfindung betrifft ein Kupplungselement für eine Kupplung, insbesondere eine Hydraulikkupplung, zur Verbindung von Druckmittelleitungen gemäß dem Oberbegriff des Patentanspruchs 1.

Kupplungselemente für Kupplungen, insbesondere für Hydraulikkupplungen, sind im Stand der Technik in einer Vielzahl von Ausgestaltungen bekannt. Hydraulikkupplungen, nämlich eine Kombination aus Kupplungsmuffe und Kupplungsstecker, dienen dem Verbinden von zwei Abschnitten einer Druckmittelleitung und werden oftmals dazu verwendet, hydraulische Geräte an eine Hydraulikquelle anzuschließen, beispielsweise zum Anschließen eines Werkzeugs oder Anbaugeräts an eine landwirtschaftliche Maschine oder eine Baumaschine.

Aus dem Stand der Technik sind Kupplungselemente bekannt, bei denen der Strömungskanal durch eine zentral gelagerte Druckhülse verschlossen wird, indem die Druckhülse in ihrer Schließposition zumindest mittelbar an dem Ventilstößelkopf des Ventilstößels anliegt. Dabei ist zwischen Ventilstößelkopf und der Druckhülse eine Dichtung angeordnet.

Beispielsweise aus EP 1 273 844 B1 ist eine derartige Hydraulikkupplung mit einem Kupplungselement bekannt, bei dem eine Druckhülse zum Verschließen eines Strömungskanals am Ventilstößelkopf eines Ventilstößels anliegt. Die Druckhülse ist mit einer Feder in Richtung ihrer Schließposition belastet und wirkt zumindest teilweise über eine Dichtung mit dem Ventilstößelkopf zusammen.

Um gemäß EP 1 273 844 B1 den Strömungskanal freizugeben, wird die Druckhülse unter Einwirkung eines beispielsweise in eine Kupplungsmuffe eingesteckten Kupplungssteckers aus ihrer Schließposition in Richtung ihrer Freigabeposition bewegt, wodurch der Strömungskanal freigegeben wird. Eine Bewegung der Druckhülse aus der Schließposition in die Freigabeposition erfolgt stets entgegen der Kraft der Feder, die die Druckhülse in ihre Schließposition drängt. In der Schließposition liegt die Druckhülse am Ventilstößelkopf an und bewirkt eine Kraft auf den Ventilstößel parallel zur Kupplungsachse des Kuppelelements. Diese Kraft setzt sich unter anderem zusammen aus der Federkraft auf die Druckhülse und den druckabhängigen Kräften auf die Druckhülse in Richtung Ihrer Schließposition. Weitere Kupplungselemente sind in der US 2004/079423 A1 beschrieben.

Die aus dem Stand der Technik bekannten Kupplungselemente weisen dabei das Risiko auf, dass bei sehr hohen Drücken, insbesondere bei Erreichen des Berstdruckes des Kupplungselements, Teile von dem Kupplungselement gelöst werden oder abreißen, wodurch ein Sicherheitsrisiko für umstehende Personen besteht.

Der vorliegenden Erfindung liegt deshalb die Aufgabe zugrunde, ein Kupplungselement und einen Ventilstößel anzugeben, bei dem die Sicherheit für Benutzer gesteigert ist, gleichzeitig aber die Betriebseigenschaften des Kupplungselements beibehalten oder verbessert werden.

Die vorgenannte Aufgabe ist bei einem gattungsgemäßen Kupplungselement durch die Merkmale des Anspruchs gelöst, wobei der Innenkörper und die Druckhülse Mittel aufweisen, mit denen die von der Druckhülse auf den Ventilstößelkopf wirkende Kraft begrenzbar ist bzw. die wirkenden Kräfte begrenzbar sind. Begrenzen bedeutet in diesem Zusammenhang stets sowohl eine absolute Begrenzung auf einen festen Schwellenwert als auch eine prozentuale Reduzierung der Kraft.

Das Kupplungselement ist ein Teil einer Kupplung, insbesondere einer Hydraulikkupplung, zur Verbindung von Druckmittelleitungen und ist beispielsweise als Kupplungsmuffe oder als Kupplungsstecker ausgebildet. Eine Kupplung umfasst dabei jeweils eine Kupplungsmuffe und einen Kupplungsstecker, wobei der Kupplungsstecker in die Kupplungsmuffe eingesteckt wird, um die Strömungskanäle der Kupplungsmuffe und des Kupplungssteckers miteinander zu verbinden. Das Kupplungselement hat vorzugsweise eine Nennweite von 19, 16 oder 12,5.

Das Kupplungselement ist beispielsweise über eine Schraub- oder Rastverbindung mit einem korrespondierenden, zweiten Kuppelelement verbindbar. Das Kupplungselement umfasst ein Gehäuse, einen Strömungskanal für ein Druckmittel, einen Ventilstößel, eine Druckhülse und einen Innenkörper.

Das Gehäuse des Kupplungselements weist eine zentrale Kupplungsachse A auf, die sich zwischen einem ersten Ende des Kupplungselements, an dem eine Druckmittelleitung anschließbar ist, und einem zweiten Ende, an dem die Verbindung mit dem weiteren Kupplungselement einer Kupplung erfolgt, erstreckt. Vorzugsweise sind die Bauelemente des Kupplungselements rotationssymmetrisch um die Kupplungsachse A ausgebildet. Beispielsweise ist der Innenkörper oder im Falle einer Kupplungsmuffe der Innenkörper rotationssymmetrisch und hülsenartig ausgebildet. Bevorzugt erfolgt ferner eine Verschiebung von verschiebbaren Bauelementen des Kupplungselements stets parallel zur Kupplungsachse A.

Insbesondere begrenzt das Gehäuse zumindest einen Teil des Strömungskanals, wobei der weitere Verlauf des Strömungskanals vorteilhaft durch die weiteren Bauteile des Kupplungselements begrenzt wird. Beispielsweise wird der Strömungskanal zumindest durch das Gehäuse, den Innenkörper und die Druckhülse begrenzt.

Das Gehäuse weist ein Anschlussteil und vorzugsweise eine Schiebehülse auf. Das Anschlussteil ist mit einem Grundkörper verschraubt, wobei der Grundkörper gleichzeitig den Innenkörper am Anschlussteil festlegt. Der Grundkörper ist ebenfalls hülsenartig ausgebildet. Eine Dichtung ist zwischen Innenkörper und Anschlussteil angeordnet, insbesondere an einer Stirnfläche des Innenkörpers. Die außenliegende Schiebehülse ist auf dem Grundkörper zwischen einer Freigabeposition und einer Sperrposition verschiebbar gehalten. Der Grundkörper umgibt wiederum den Innenkörper.

In dem Grundkörper ist vorzugsweise eine Vielzahl von umlaufenden Ausnehmungen vorgesehen, in denen Sperrelemente, insbesondere Sperrkugeln, angeordnet sind. Die Sperrelemente sind im Freigabezustand in den Ausnehmungen des Grundkörpers angeordnet und wirken mit einer zugehörigen Innenumfangsnut in der Schiebhülse derart zusammen, dass die Schiebehülse formschlüssig in ihrer Freigabeposition gehalten wird. Zwischen dem Grundkörper und der Schiebehülse ist beispielsweise eine Hülsenfeder angeordnet, die die Schiebehülse in ihrer Freigabeposition gegen die Sperrelemente, in Richtung der Sperrposition der Schiebehülse drängt. Eine weitere Bewegung der Schiebehülse wird in diesem Zustand durch die Sperrelemente verhindert. Das Kupplungselement umfasst zudem einen Kolben, der innerhalb des Grundkörpers geführt ist, und der in der Freigabeposition der Schiebehülse eine Bewegung der Sperrelemente verhindert.

Wird nun, beispielsweise durch Einbringen eines korrespondierenden, zweiten Kupplungselements in das erste Kupplungselement, z. B. eines Kupplungssteckers in eine Kupplungsmuffe, der Kolben in Richtung des Innenkörpers verschoben, wird ab einer bestimmten Position des Kolbens die Sperrung der Sperrelemente zunächst von einem Bereich des zweiten Kupplungselements übernommen, bis die Sperrkugeln in eine Außenumfangsnut des zweiten Kupplungselements ausweichen können. In diesem Moment wird die Sperrhülse, deren Bewegung nunmehr freigegeben ist, durch die Hülsenfeder in ihre Rastposition gedrängt, wobei die Sperrelemente anschließend durch eine Sperrfläche der Schiebehülse blockiert werden. Die Schiebehülse bewegt sich dabei soweit, bis sie an einem am Grundkörper angeordneten Begrenzungselement anliegt- Sperrposition der Schiebehülse. Das Begrenzungselement ist beispielsweise als ein im Grundkörper - in dessen Außenumfang - angeordneter Sprengring ausgebildet.

Um die derart verbundenen Kupplungselemente einer Kupplung voneinander zu trennen, muss die Schiebehülse manuell entgegen der Kraft der Hülsenfeder in ihre Freigabeposition verschoben werden, wodurch die Sperrelemente wieder in die Innenumfangsnut der Sperrhülse ausweichen können und so ein Auskuppeln des zweiten Kuppelelements ermöglichen.

Der Ventilstößel ist innerhalb des Kupplungselements derart gehalten, dass der Ventilstößel zentral im Strömungskanal angeordnet ist. Folglich umgibt der Strömungskanal den im Strömungskanal angeordneten Ventilstößel, so dass insbesondere der Schaft des Ventilstößels und der Ventilstößelkopf von dem Druckmittel im Betrieb umströmt werden. Der Ventilstößelkopf ist bevorzugt Teil der flachdichtenden Stirnfläche am zweiten Ende des Kupplungselements.

Der Ventilstößel ist derart angeordnet, dass er von dem Innenkörper und der Druckhülse umgeben wird. Die Druckhülse ist vorzugsweise innerhalb des mit dem Gehäuse fest oder schwimmend verbundenen Innenkörpers derart geführt, dass sich die Druckhülse parallel zur Kupplungsachse A zwischen einer Schließposition, in der der Strömungskanal durch die Druckhülse verschlossen wird, und einer Öffnungsposition, in der der Strömungskanal durch die Druckhülse freigegeben wird, verschieben lässt. Insbesondere ist eine Druckfeder vorgesehen, die eine Kraft auf die Druckhülse in Richtung Ihrer Schließposition bewirkt, so dass die Druckhülse durch die Druckfeder stets in ihre Schließposition gedrängt wird.

In der Schließposition der Druckhülse erfolgt ein Verschließen des Strömungskanals dadurch, dass die Druckhülse unmittelbar an dem Ventilstößelkopf anliegt. Vorzugsweise ist stets eine Dichtung zwischen Druckhülse und Ventilstößelkopf vorgesehen. Die Dichtung ist beispielsweise in einer umlaufenden Nut im Ventilstößelkopf angeordnet. Die Dichtung liegt vorzugsweise an einem Innenumfang der Druckhülse an.

Die Druckhülse ist so ausgebildet und angeordnet, dass sie derart an dem Ventilstößelkopf anliegt, dass eine Kraft parallel zur Kupplungsachse A von der Druckhülse auf den Ventilstößelkopf wirkt. Diese Kraft setzt sich insbesondere zusammen aus der von der Druckfeder auf die Druckhülse wirkenden Kraft und aus Kraftanteilen, die aus im Strömungskanal vorhandenem, unter Druck stehendem Druckmittel resultieren, das auf die Druckhülse wirkt und eine Kraft auf die Druckhülse in Richtung des Ventilstößelkopfes verursacht.

Bei anliegendem Druck im geschlossenen Strömungskanal wird der Ventilstößel folglich einerseits durch den auf ihn wirkenden Druck, andererseits durch die von der Druckhülse ausgehende Kraft belastet. Bei steigendem Druck innerhalb des Strömungskanals längt sich beispielsweise der Schaft des Ventilstößels durch die axialen Zugspannungen was bei unverminderter Kraft auf den Ventilstößel zu einem Abreißen des Ventilstößelkopfes oder des Ventilstößels im Bereich des Schaftes oder im Bereich der Aufhängung des Ventilstößels führen kann.

Um die von der Druckhülse auf den Ventilstößel wirkende Kraft bzw. die Kräfte, insbesondere in Richtung parallel zur Kupplungsachse A, zu begrenzen, weist der Innenkörper und/oder die Druckhülse Mittel auf, mit denen die Kraft begrenzbar ist. Es ist beispielsweise vorgesehen, dass die Mittel am Innenkörper und/oder an der Druckhülse derart wirken, dass die Kraft der Druckhülse auf den Ventilstößelkopf begrenzt wird, indem zumindest ein Teil der Kraft bzw. der Kräfte von der Druckhülse auf den Innenkörper übertragen werden. Von dem Innenkörper werden die Kräfte auf das Gehäuse übertragen. Durch die Begrenzung der Kraft wird eine Zerstörung des Ventilstößels zuverlässig verhindert und damit die Betriebssicherheit des Kupplungselements gesteigert.

Insbesondere ist vorgesehen, dass die Mittel am Innenkörper und/oder an der Druckhülse derart ausgebildet sind, dass die auf den Ventilstößelkopf wirkende Kraft in mindestens einem Betriebszustand des Kupplungselements begrenzt bzw. reduziert wird. Beispielsweise ist vorgesehen, dass die von der Druckhülse auf den Ventilstößelkopf wirkende Kraft ab einem vorbestimmten Schwellenwert des Drucks innerhalb des Kupplungselements mit dem Mittel bzw. den Mitteln begrenzt oder reduziert wird.

Übliche Betriebsdrücke für ein Kupplungselement liegen zwischen 25 MPa und 40 MPa, insbesondere ist der Betriebsdruck 35 MPa. Vorzugsweise ist vorgesehen, dass der vorbestimmte Schwellenwert des Drucks innerhalb des Kupplungselements, ab dem mit dem Mittel bzw. den Mitteln die Kraft begrenzt oder reduziert wird, im Bereich zwischen dem Betriebsdruck und dem 4-fachen des Betriebsdrucks liegt, insbesondere zwischen dem 1,5-und dem 2-fachen des Betriebsdrucks.

Nach der Erfindung sind sowohl am Innenkörper als auch an der Druckhülse Mittel zur Begrenzung der Kraft von der Druckhülse auf den Ventilstößelkopf vorgesehen. Die Mittel sind insbesondere derart ausgebildet und eingerichtet, dass die Mittel am Innenkörper und die Mittel an der Druckhülse zusammenwirken, um die Kraft von der Druckhülse auf den Ventilstößelkopf zu begrenzen bzw. zu reduzieren.

Vorteilhaft ist vorgesehen, dass die Mittel am Innenkörper und/oder die Mittel an der Druckhülse derart ausgebildet und eingerichtet sind, dass mit den Mitteln eine Bewegung der Druckhülse in Richtung des Ventilstößelkopfes begrenzbar ist.

Das erfindungsgemäße Kupplungselement weist den Vorteil auf, dass durch die Mittel das Risiko einer Überlastung des Ventilstößels reduziert wird, indem die auf ihn wirkende Kraft von der Druckhülse in mindestens einem Betriebszustand, insbesondere ab mindestens einem Betriebszustand, mit den Mitteln begrenzt wird, wodurch eine Zerstörung des Ventilstößels verhindert wird. Durch die Mittel werden die von der Druckhülse ausgehenden Kräfte auf den Ventilstößelkopf und den Innenkörper aufgeteilt.

Das erfindungsgemäße Kupplungselement weist zudem den Vorteil auf, dass mit kostengünstigeren Werkstoffen die gleichen Betriebsparameter, z. B. Betriebsdruck und Berstdruck, erreicht werden können, wie bei bekannten Konstruktionen. Ferner besteht der Vorteil, dass mit den gleichen Werkstoffen wie bei bekannten Konstruktionen höhere Betriebsparameter erreicht werden können und mit höherwertigen Werkstoffen sogar gesteigerte Betriebsparameter. Es ist vorgesehen, dass das Mittel am Innenkörper als erster Anschlagbereich und das Mittel an der Druckhülse als zweiter Anschlagbereich ausgebildet ist, wobei der erste Anschlagbereich und der zweite Anschlagbereich zur Begrenzung der Kraft auf den Ventilstößel, insbesondere den Ventilstößelkopf, zusammenwirken.

Die Druckhülse wird innerhalb des Innenkörpers geführt. Um die Kraft der Druckhülse auf den Ventilstößelkopf zu begrenzen bzw. zu reduzieren, ist jeweils am Innenkörper und an der Druckhülse ein Anschlagbereich vorgesehen. Der erste Anschlagbereich und der zweite Anschlagbereich kommen in mindestens einem Betriebszustand, insbesondere ab mindestens einem Betriebszustand, des Kupplungselements zur Anlage, so dass eine Kraftübertragung von der Druckhülse auf den Innenkörper erfolgen kann, wodurch ein Teil der auf die Druckhülse in Richtung des Ventilstößelkopfes wirkenden Kräfte über den ersten Anschlagbereich bzw. den zweiten Anschlagbereich von dem am Gehäuse befestigten Innenkörper übertragen wird. Dadurch wird die von der Druckhülse auf den Ventilstößel wirkende Kraft begrenzt, was insbesondere bei hohen Drücken, insbesondere Drücken oberhalb des Betriebsdrucks, innerhalb des geschlossenen Strömungskanals vorteilhaft ist.

Der erste Anschlagbereich und der zweite Anschlagbereich sind beispielsweise als lokale Vorsprünge ausgebildet, die sich von dem Innenkörper oder der Druckhülse erstrecken. Vorzugsweise ist eine Mehrzahl regelmäßig verteilter Vorsprünge vorgesehen, die den ersten Anschlagbereich oder den zweiten Anschlagbereich bilden.

Als besonders vorteilhaft hat sich gemäß einer weiteren Ausgestaltung herausgestellt, wenn vorgesehen ist, dass der erste Anschlagbereich als erster Absatz an dem Innenkörper und der zweite Anschlagbereich als zweiter Absatz an der Druckhülse ausgebildet ist. Der erste Absatz am Innenkörper und der zweite Absatz an der Druckhülse sind vorteilhaft umlaufend ausgebildet, so dass über den gesamten Umfang der beiden Absätze eine gleichmäßige Kraftübertragung von der Druckhülse auf den Innenkörper erfolgen kann.

Der erste Absatz und der zweite Absatz weisen korrespondierende Anlageflächen auf, so dass die Kraft von der Druckhülse auf den Ventilstößel durch Kontakt der Anlageflächen begrenzbar ist. Vorzugsweise sind die korrespondierenden Anlageflächen orthogonal zur Kupplungsachse des Kupplungselements ausgebildet. Der erste Ansatz ist an dem in Richtung des Ventilstößelkopfes orientierten Endbereichs des Innenkörpers ausgebildet und hat vorzugsweise einen rechteckigen Querschnitt. Vorteilhaft ist am Innenkörper ein weiterer Dichtungsabsatz ausgebildet, und dass zwischen dem ersten Absatz und dem Dichtungsabsatz eine Dichtung angeordnet ist, die zwischen einem Innenumfang des Innenkörpers und einem Außenumfang der Druckhülse wirkt. Der erste Absatz dient dann einerseits der Aufnahme von Kräften von der Druckhülse und andererseits zur Begrenzung einer Nut für die Dichtung.

Der zweite Absatz ist vorzugsweise an dem in Richtung der Öffnungsposition der Druckhülse orientierten Endbereich der Druckhülse ausgebildet. Der zweite Absatz hat beispielsweise einen rechteckigen Querschnitt. Vorzugsweise bildet der zweite Absatz zumindest einen Teil der in Richtung der Freigabeposition der Druckhülse orientierten, kreisringförmigen Stirnfläche der Druckhülse. Insbesondere weist der Übergang zwischen dem Innenumfang der Druckhülse und der Stirnfläche einen Radius oder eine Fase auf. Beispielsweise beträgt der Radius zwischen 1 mm und 2 mm, insbesondere 1,5 mm.

Bevorzugt ist vorgesehen, dass der Innendurchmesser des ersten Absatzes des Innenkörpers kleiner als der Außendurchmesser des zweiten Absatzes der Druckhülse ist, wodurch sich der erste Absatz und der zweite Absatz zumindest teilweise in radialer Richtung überschneiden. Dadurch wird sichergestellt, dass mit dem ersten Absatz am Innenkörper eine Bewegung der Druckhülse in Richtung des Ventilstößelkopfes begrenzbar ist, wodurch die Kraft von der Druckhülse auf den Ventilstößelkopf begrenzbar ist.

Eine weitere Ausgestaltung des Kupplungselements sieht vor, dass der erste Anschlagbereich und der zweite Anschlagbereich zumindest im drucklosen Schließzustand der Druckhülse - ungekuppelter Zustand - zueinander beabstandet sind. Vorzugsweise ist die Länge der Druckhülse derart gewählt, dass die Druckhülse im Schließzustand an den Ventilstößelkopf anliegt, wobei gleichzeitig der erste Anschlagbereich und der zweite Anschlagbereich zueinander beabstandet sind.

Ein steigender Druck innerhalb des Strömungskanals führt zu einer Längung des Ventilstößels, insbesondere im Bereich des Schafts, und einer Weitung der Druckhülse, wobei beide Effekte dazu führen, dass ab einem bestimmten Schwellenwert des Drucks innerhalb des Strömungskanals der erste Anschlagbereich und der zweite Anschlagbereich aneinander anliegen und eine teilweise Kraftübertragung auf den Innenkörper erfolgt, wodurch die Kraft von der Druckhülse auf den Ventilstößelkopf begrenzt wird. Der Schwellenwert liegt vorzugsweise in einem Bereich zwischen dem Betriebsdruck und dem vierfachen des Betriebsdrucks, insbesondere dem 1,5-und dem 2-fachen des Betriebsdrucks, wobei der Betriebsdruck bevorzugt zwischen 25 MPa und 40 MPa liegt.

Der erste Anschlagbereich und der zweite Anschlagbereich sind folglich so ausgebildet und angeordnet, dass die Kraft zumindest ab einem vorbestimmten Druck innerhalb des Strömungskanals begrenzt wird, insbesondere einem Druck zwischen 35 MPa und 70 MPa. Der erste Anschlagbereich und der zweite Anschlagbereich kommen bei dieser Ausgestaltung folglich erst ab einem vorbestimmten Druck innerhalb des Strömungskanals zur Anlage. Vorher, also bei geringerem Druck unterhalb des Schwellenwerts, insbesondere unterhalb von 35 MPa, innerhalb des Strömungskanals des Druckes liegt der erste Anschlagbereich nicht am zweiten Anschlagbereich an und die Druckhülse stützt sich ausschließlich am Ventilstößelkopf ab.

Eine weitere Ausgestaltung sieht deshalb vor, dass der erste Anschlagbereich und der zweite Anschlagbereich zumindest bei einem vorbestimmten Druck innerhalb des Strömungskanals durch eine druckabhängige Verformung des Ventilstößels und/oder der Druckhülse zur Anlage kommen. Je nach Material des Ventilstößels, der Druckhülse und des Innenkörpers variiert der Druck, ab dem eine elastische und/oder plastische Verformung der Bauelemente erfolgt. Die Materialien sind jedenfalls so gewählt, dass ab einem vorbestimmten Druck der Ventilstößel und/oder die Druckhülse derart verformt werden, dass der erste Anschlagbereich und der zweite Anschlagbereich zur Anlage kommen, wodurch die Kraft auf den Ventilstößelkopf begrenzt wird. Die Verformung des Ventilstößels, der Druckhülse und des Innenkörpers erfolgt vorzugsweise im elastischen Bereich. Erst bei einer ungewollten Überlastung des Kupplungselements verformen sich die Bauteile im plastischen Bereich, was schließlich zu einer Undichtigkeit im Bereich zwischen Druckhülse und Ventilstößelkopf kommt. Wie bereits ausgeführt, liegt dieser Druck zwischen dem Betriebsdruck in dem vierfachen des Betriebsdrucks, insbesondere zwischen dem 1,5-und dem 2-fachen des Betriebsdrucks.

Vorteilhaft ist zwischen Ventilstößelkopf und Druckhülse eine Dichtung vorgesehen, die sich an die Dichtfläche anschließt und in der Schließposition an einem Innenumfang der Druckhülse anliegt.

Eine derartige konische Abdichtung zwischen Ventilstößelkopf und Druckhülse hat den Vorteil, dass bereits bei einem geringen Hub der Druckhülse der Strömungskanal geöffnet wird, wodurch die Strömungsverluste in der Kupplung reduziert werden. Zudem ist die konische Abdichtung einfach und robust gegenüber Toleranzschwankungen. Ein weiterer Vorteil ist, dass der Spalt, der sich für eine am Ventilstößelkopf vorgesehene Dichtung auf der druckabgewandten Seite ergibt, bei konischer Abdichtung zwischen Ventilstößelkopf und Druckhülse auch bei der Ausnutzung üblicher Fertigungstoleranzen minimiert oder vollständig geschlossen werden kann.

Die Dichtwirkung lässt sich dadurch steigern, dass vorgesehen ist, dass α und β unterschiedlich sind, wobei α kleiner als β ist. Dadurch liegt die Gegendichtfläche an einer Kante der Dichtfläche an, wodurch Toleranzen ausgeglichen werden und ein Spalt auf der druckabgewandten Seite verhindert wird. Denkbar ist α-zwischen 0° und 35° und-β zwischen 30° und 45°. Bei einer denkbaren Ausführung, bei der sich die Dichtfläche parallel zur Kupplungsachse A erstreckt, folglich α = 0° ist und β beispielweise 30° beträgt, liegt die Gegendichtfläche in der Schließposition nur an einer umlaufenden Kante der Dichtfläche an.

Der Ventilstößel lässt sich vorteilhaft innerhalb des Kupplungselements montieren, wenn gemäß einer weiteren Ausgestaltung vorgesehen ist, dass der Ventilstößel über ein Stößellager am Gehäuse gehalten ist, und das Stößellager mindestens zwei Halbschalen umfasst. Der Ventilstößel weist in seinem Schaft eine umlaufende Nut auf, in die die Halbschalen zumindest teilweise eingesetzt werden. Nachfolgend wird der Ventilstößel mit den eingesetzten Halbschalen innerhalb des Gehäuses montiert, insbesondere derart, dass der Ventilstößel zwischen Innenkörper und Anschlussteil des Gehäuses gehalten wird.

Es hat sich ferner als vorteilhaft für die Betriebssicherheit herausgestellt, wenn vorgesehen ist, dass das Stößellager in einer Nut am Ventilstößel angeordnet ist, wobei die Nut zwei gegenüberliegende Nutflanken und einen Nutgrund aufweist. Die Nutflanken sind vorzugsweise orthogonal zur Kupplungsachse A und der Nutgrund parallel dazu ausgebildet. Zwischen mindestens einer der Nutflanken und dem Nutgrund, also im Bereich des Übergangs von der Nutflanke auf den Nutgrund, ist mindestens eine erste Fase mit einem Winkel γ zur Kupplungsachse A ausgebildet. Vorzugsweise ist mindestens eine Fase zwischen der von dem Ventilstößelkopf abgewandten Nutflanke und dem Nutgrund vorgesehen. Vorteilhaft beträgt der Winkel γ zwischen 30° und 60°. Besonders bevorzugt hat die Fase einen Winkel γ von 35° bei einer Breite von 0,45 mm (35°x0,45). Beispielsweise ist zwischen der Nutflanke, an der keine Fase vorgesehen ist, und dem Nutgrund ein Radius vorgesehen.

Insbesondere ist auch vorgesehen, dass im Übergang von jeder der beiden Nutflanken auf den Nutgrund jeweils mindestens eine Fase mit dem Winkel γ zur Kupplungsachse A bzw. zu der mit der Kupplungsachse A zusammenfallenden Längsachse des Ventilstößels vorgesehen ist.

Durch das Vorsehen dieser mindestens einen Fase werden die Spannungen im Nutgrund bei einer Belastung des Ventilstößels deutlich reduziert, wodurch die Betriebssicherheit gesteigert wird und/oder die Betriebsparameter gesteigert werden können.

Die Spannungen am Nutgrund lassen sich weiter reduzieren, wenn gemäß einer weiteren Ausgestaltung vorgesehen ist, dass zwischen der mindestens einen Nutflanke der beiden Nutflanken und dem Nutgrund zusätzlich eine zweite Fase mit einem Winkel (δ) zur Kupplungsachse A ausgebildet ist, und dass sich die zweite Fase ausgehend von der Nutflanke an die erste Fase anschließt. Ausgehend von der Nutflanke wird der Übergang zum Nutgrund zunächst gebildet durch die erste Fase und anschließend die zweite Fase. Beispielsweise sind die erste Fase und die zweite Fase an der von dem Ventilstößelkopf abgewandten Nutflanke vorgesehen. Vorzugsweise ist der Winkel γ der ersten Fase größer als der Winkel δ der zweiten Fase. Insbesondere beträgt der Winkel δ zwischen 30° und 60°. Besonders bevorzugt ist es ferner, im Übergangsbereich der mindestens einen Nutflanke auf den Nutgrund, mindestens eine dritte Fase oder mindestens eine dritte Fase und eine vierte Fase vorzusehen.

Beispielsweise ist auch vorgesehen, dass im Übergangsbereich beider Nutflanken auf den Nutgrund jeweils mindestens eine erste Fase und mindestens eine zweite Fase vorgesehen ist.

Der Verlust von Druckmittel beim Kuppelvorgang einer Kupplung mit einem Kupplungselement lässt sich auf einfache Weise dadurch reduzieren, wenn vorgesehen ist, dass das Kupplungselement flachdichtend ausgebildet ist, also alle Bauelemente des Kupplungselements am zweiten Ende des Kupplungselements in einer Ebene liegen. Dadurch wird das Eindringen von Schmutz verhindert, die Reinigung des Kupplungselements vereinfacht und der Verlust von Druckmittel minimiert.

Besonders vorteilhaft ist der Einsatz des Kupplungselements in einer Kupplung, insbesondere einer Hydraulikkupplung.

Im Einzelnen gibt es nun eine Vielzahl von Möglichkeiten das Kupplungselement auszugestalten und weiterzubilden. Dazu wird verwiesen sowohl auf die dem Patentanspruch 1 nachgeordneten Patentansprüche als auch auf die nachfolgende Beschreibung der bevorzugten Ausführungsbeispielen in Verbindung mit der Zeichnung. In der Zeichnung zeigen:
- Fig.1: ein Ausführungsbeispiel eines Kupplungselements in geschnittener Seitenansicht,
- Fig. 2: das Ausführungsbeispiel des ersten Kupplungselements gemäß Fig. 1 in einem anderen Betriebszustand und ein Ausführungsbeispiel eines zweiten Kupplungselements in geschnittener Seitenansicht,
- Fig. 3a: einen Ausschnitt eines Ausführungsbeispiels eines Kupplungselements in Bereich des Ventilstößelkopfes,
- Fig. 3b: einen Ausschnitt eines Ausführungsbeispiels eines Kupplungselements in Bereich des Ventilstößelkopfes,
- Fig. 4: einen Ausschnitt des Ausführungsbeispiels gemäß Fig. 1 im Bereich der Stößelführung,
- Fig. 5: einen Ausschnitt eines Ausführungsbeispiels eines Ventilstößels für ein Kupplungselement,
- Fig. 6a: einen Ausschnitt eines Ausführungsbeispiels eines Ventilstößels für ein Kupplungselement, und
- Fig. 6b: einen Ausschnitt eines Ausführungsbeispiels eines Ventilstößels für ein Kupplungselement.

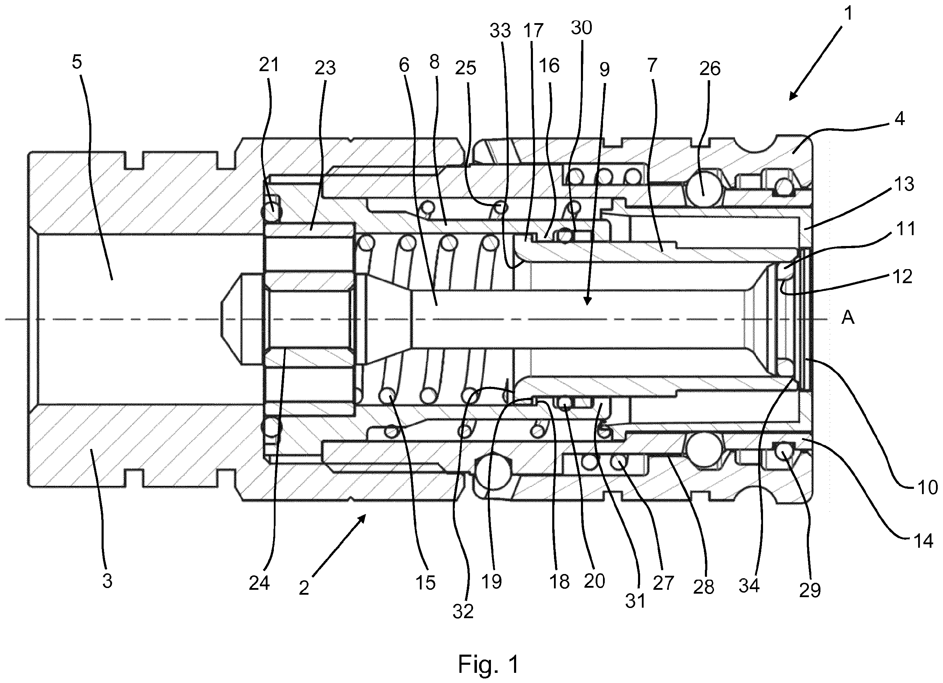

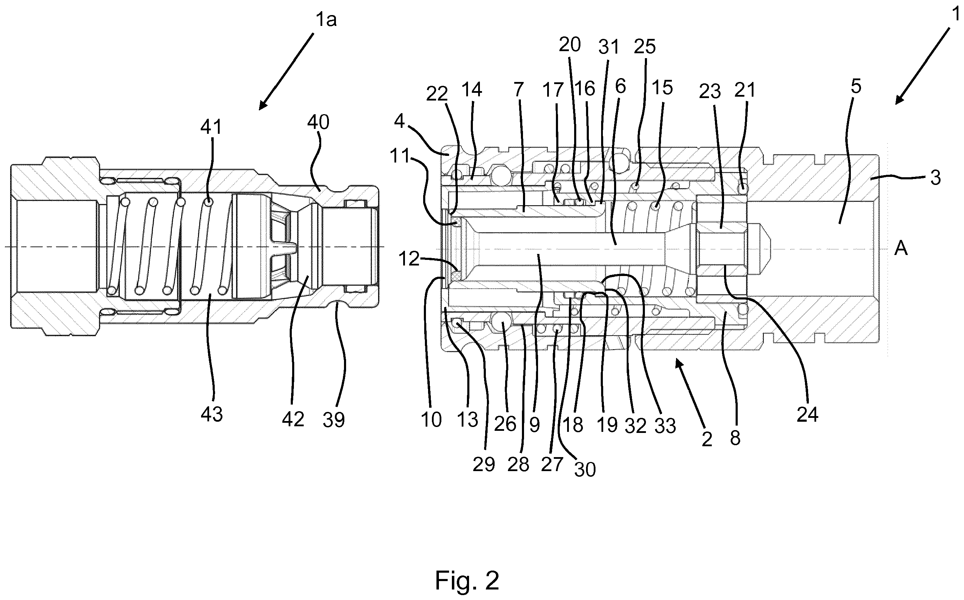

Fig. 1 zeigt ein Ausführungsbeispiel eines Kupplungselements 1, das als Kupplungsmuffe ausgebildet ist. Das Kupplungselement 1 ist Teil einer Kupplung zur Verbindung von Druckmittelleitungen, bei diesem Ausführungsbeispiel einer Hydraulikkupplung. Das dargestellte Kupplungselement 1, die Kupplungsmuffe, dient dem Zusammenfügen mit einem - in Fig. 2 dargestellten - korrespondierenden, zweiten Kupplungselement 1a - einem Kupplungsstecker - wodurch zwei Druckmittelleitungen, die der Kupplungsmuffe und die des Kupplungssteckers, miteinander verbunden werden.

Das Kupplungselement 1 umfasst ein Gehäuse 2, wobei das Gehäuse 2 ein Anschlussteil 3 sowie eine Schiebehülse 4 umfasst. Das Gehäuse 2 begrenzt zumindest teilweise einen Strömungskanal 5 für ein Druckmittel. Innerhalb des Strömungskanals 5 ist ein Ventilstößel 6 zentral angeordnet. Der Ventilstößel 6 ist von einer Druckhülse 7 umgeben. Die Druckhülse 7 ist in einem Innenkörper 8 entlang einer Kupplungsachse A verschiebbar geführt.

Der zentral im Strömungskanal 5 angeordnete Ventilstößel 6 weist einen Ventilstößelschaft 9 und einen Ventilstößelkopf 10 auf. Der Ventilstößelkopf 10 ist gegenüber dem Ventilstößelschaft 9 erweitert, weist also einen größeren Durchmesser auf. Die Druckhülse 7 ist derart in dem Innenkörper 8 gelagert, dass die Druckhülse 7 entlang der Kupplungsachse A zwischen einer Schließposition, in der der Strömungskanal 5 durch die Druckhülse 7 verschlossen wird, und einer Öffnungsposition in der der Strömungskanal 5 durch die Druckhülse 7 freigegeben ist, verschiebbar ist.

In der in Fig. 1 dargestellten, drucklosen Schließposition der Druckhülse 7 liegt die Druckhülse 7 an dem Ventilstößelkopf 10 an, wodurch eine Kraft parallel zur Kupplungsachse A von der Druckhülse 7 auf den Ventilstößelkopf 10 wirkt. Zwischen Ventilstößelkopf 10 und der Druckhülse 7 ist zudem eine Dichtung 11 angeordnet, die in einer entsprechenden Nut 12 im Ventilstößelkopf 10 angeordnet ist. Der Ventilstößelkopf 10 bildet in der flachdichtenden Stirnfläche des Kupplungselements - in Fig. 1 rechts dargestellt - einen Teil der Stirnfläche. Die flachdichtende Stirnfläche des Kupplungselements 1 wird ferner gebildet durch einen Kolben 13, einen Grundkörper 14 und die Schiebehülse 4.

Die Druckhülse 7, die innerhalb des Innenkörpers 8 verschiebbar gehalten ist, wird durch eine Druckfeder 15 stets in Richtung ihrer Schließposition gedrängt, so dass die Druckhülse 7 aus ihrer Schließposition nur entgegen der Kraft der Druckfeder 15 bewegbar ist. Die Druckfeder 15 umgibt ebenfalls den Ventilstößel 6. Wenn die Druckhülse 7 an dem Ventilstößel 6, insbesondere am Ventilstößelkopf 10, anliegt, wirkt eine Kraft parallel zur Kupplungsachse A von der Druckhülse 7 auf den Ventilstößelkopf 10. Diese Kraft setzt sich insbesondere zusammen aus der Kraft der Druckfeder 15 und einer druckabhängigen Komponente, nämlich der Wirkung des unter Druck stehenden Druckmittels auf die Druckhülse 7. Die auf den Ventilstößel 6 wirkenden Kräfte können bei sehr hohen Drücken zu einer Beschädigung des Ventilstößels 6 führen.

Um dies zu verhindern, weisen der Innenkörper 8 und die Druckhülse 7 Mittel auf, mit denen die von der Druckhülse 7 auf den Ventilstößelkopf 10 wirkende Kraft begrenzbar ist, nämlich einen ersten umlaufenden Absatz 16 am Innenkörper 8 und einen zweiten umlaufenden Absatz 17 an der Druckhülse 7. Der erste Absatz 16 stellt einen ersten Anschlagbereich und der zweite Absatz 17 einen zweiten Anschlagbereich dar. Wenn der erste Absatz 16 an dem zweiten Absatz 17 anliegt, erfolgt eine Kraftübertragung von der Druckhülse 7 auf den Innenkörper 8, wodurch die von der Druckhülse 7 auf den Ventilstößelkopf 10 wirkende Kraft begrenzt wird.

Der zweite Absatz 17 ist in dem in Richtung der Freigabeposition der Druckhülse 7 orientierten Endbereich ausgebildet. Der zweite Absatz 17 bildet die in dieser Richtung orientierte Stirnfläche 32 der Druckhülse 7. Zwischen dem Innenumfang der Druckhülse 7 und der Stirnfläche 32 ist ein Radius 33 ausgebildet, der die Strömungseigenschaften der Druckhülse 7 verbessert.

In dem in Fig. 1 dargestellten, drucklosen - kein unter Druck stehendes Druckmittel im Strömungskanal - Schließzustand des Kupplungselements 1 ist die Anschlagfläche 18 des ersten Absatzes 16 von der Anschlagfläche 19 des zweiten Absatzes 17 in Längsrichtung, also in Richtung parallel zur Kupplungsachse A, beabstandet. Bei steigendem Druck innerhalb des Strömungskanals 5 längt sich durch das unter Druck stehende Druckmittel unter anderem der Ventilstößelschaft 9, wobei sich die Druckhülse 7 weitet. Durch diese Effekte kommt die erste Anschlagfläche 18 des ersten Absatzes 16 mit der zweiten Anschlagfläche 19 des zweiten Absatzes 17 in Kontakt, wodurch eine Kraftübertragung von der Druckhülse 7 auf den Innenkörper 8 erfolgt und die von der Druckhülse 7 auf den Ventilstößelkopf 10 wirkende Kraft begrenzt wird, indem ein Teil der Kraft von dem Innenkörper 8 abgetragen wird. Dieser Zustand ist beispielsweise in Fig. 2 dargestellt.

Die von der Druckhülse 7 auf den Ventilstößelkopf 10 wirkende Kraft wird folglich in mindestens einem Betriebszustand, insbesondere ab mindesten einem Schwellenwert für den Druck innerhalb des Strömungskanals 5, begrenzt, insbesondere zwischen Ventilstößelkopf 10 und Innenkörper 8 aufgeteilt Dadurch, dass der erste Absatz 16 und der zweite Absatz 17 umlaufend ausgebildet sind, kann die Kraftübertragung vorteilhaft über die gesamte Ringfläche erfolgen.

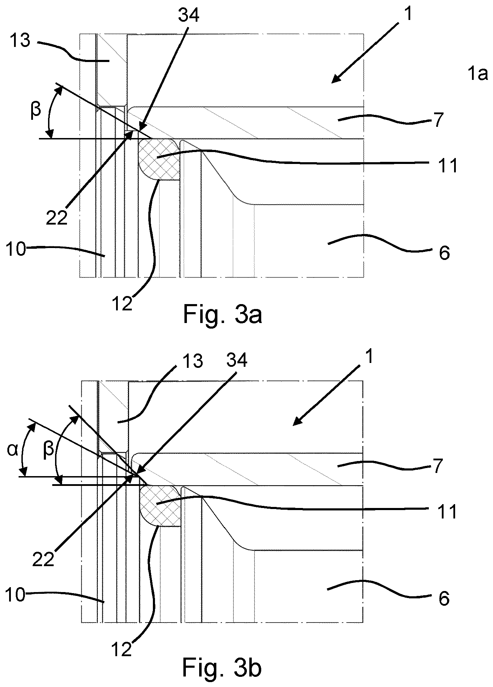

Die Druckhülse 7 liegt in ihrem Schließzustand mit ihrer konisch verlaufenden Gegendichtfläche 34 an dem Ventilstößelkopf an, so dass zwischen Druckhülse 7 und Ventilstößelkopf 10 eine konische Abdichtung ausgebildet ist. Die Details der Anlage ergeben sich aus Fig. 3a und der zugehörigen Beschreibung.

Ferner ist zwischen Druckhülse 7 und Innenkörper 8 eine Dichtung 20 angeordnet. Die Dichtung 20 ist in einer Nut 30 angeordnet, die am Innenkörper 8 zwischen dem ersten Absatz 16 und einem Dichtabsatz 31 ausgebildet ist. Der Dichtabsatz 31 bildet die in Richtung des Ventilstößelkopfes 10 orientierte Stirnfläche des Innenkörpers 8.

Der Innenkörper 8 ist zwischen Grundkörper 14 und dem Anschlussteil 3 verspannt, wobei eine Dichtung 21 zwischen Innenkörper 8 und dem Anschlussteil 3 angeordnet ist.

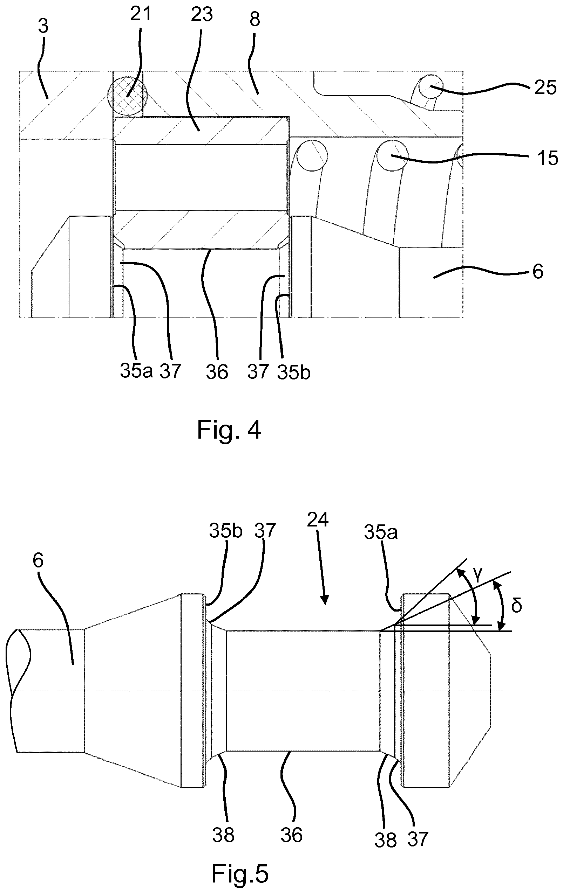

Der Ventilstößel 6 ist über ein Ventilstößellager 23 am Gehäuse 2 gehalten, insbesondere nämlich zwischen Innenkörper 8 und dem Anschlussteil 3 verspannt. Das Ventilstößellager 23 umfasst zwei Halbschalen, die in eine Nut 24 am Ventilstößel 6 eingreifen und diesen dadurch zentral im Strömungskanal 5 halten. Die Druckfeder 15 der Druckhülse 7 stützt sich am Ventilstößellager 23 ab, um eine Kraft auf die Druckhülse 7 in Richtung der Schließposition zu bewirkten. Die Details eines Ventilstößels 6 im Bereich des Ventilstößellagers 23 ergeben sich beispielsweise aus Fig. 4.

Zwischen Innenkörper 8 und dem mit dem Anschlussteil 3 verschraubten Grundkörper 14 ist eine Kolbenfeder 25 vorgesehen, die den Kolben 13 in seine Schließposition in der flachdichtenden Stirnfläche des Kupplungselements 1 drängt. In der Schließposition blockiert der Kolben 13 eine Bewegung der Sperrkugeln 26, die dadurch ferner die Schiebehülse 4 in ihrer Freigabeposition blockieren. Die Schiebehülse 4 wird von einer Hülsenfeder 27 gegen die Sperrkugeln 26 gedrängt.

Wird beim Verbinden des Kupplungselements 1 - hier Kupplungsmuffe - ein korrespondierendes Kupplungselement 1a - Kupplungsstecker - (siehe Fig. 2) eingebracht, wird der Kolben 13 entgegen der Kraft der Kolbenfeder 25 in das Innere des Kupplungselements 1 gedrängt, wodurch eine Bewegung der Sperrkugeln 26 freigegeben wird. Die Sperrkugeln 26 bewegen sich dann in eine - in Fig. 2 dargestellte - Außenumfangsnut 39 am korrespondierenden Kupplungselement 1a. Dadurch bewegt sich die Schiebehülse 4 in Richtung ihrer Sperrposition, in der eine Bewegung der Sperrkugeln 26 wiederum durch eine Sperrfläche 28 der Schiebehülse 4 derart blockiert ist, dass eine formschlüssige Verbindung zwischen dem ersten Kupplungselement 1 und dem zweiten Kupplungselement 1a über die Sperrkugeln 26 hergestellt ist. In der Sperrposition liegt die Schiebehülse 4 an einem Begrenzungselement an, das hier als Sprengring 29 ausgebildet ist. Die Schiebehülse 4 ist stets durch die Hülsenfeder 27 belastet.

Fig. 2 zeigt das Ausführungsbeispiel des ersten Kupplungselements 1 gemäß Fig. 1 in einem anderen Betriebszustand, nämlich in dem Betriebszustand, in dem der erste Absatz 16 des Innenkörpers 8 und der zweite Absatz 17 der Druckhülse 7 zur Anlage gekommen sind. In diesem Betriebszustand, vorliegend bei einem Druck von etwa 40 MPa, wird die Kraft von der Druckhülse 7 auf den Ventilstößelkopf 10 durch die Mittel, nämlich den ersten Absatz 16 und den zweiten Absatz 17 begrenzt, indem ein Teil der Kraft auf den Innenkörper 8 übertragen wird. In Fig. 2 liegen der erste Absatz 16 und der zweite Absatz 17 flächig aneinander an.

Fig. 2 zeigt ferner ein Ausführungsbeispiel eines zweiten Kupplungselements 1a, das hier als Kupplungsstecker ausgebildet ist. Das zweite Kupplungselement 1a umfasst einen Steckerkörper 40, in dem ein mit einer Feder 41 belasteter Stößel 42 angeordnet ist. Im Steckerkörper 40 ist eine Außenumfangsnut 39 angeordnet, die mit den Sperrkugeln 26 des ersten Kupplungselements 1 zusammenwirken. Im dargestellten Zustand verschließt der Stößel 42 den Strömungskanal 43. Das zweite Kupplungselement 1a ist in das erste Kupplungselement 1 einbringbar, indem der Steckerkörper 40 derart in das erste Kupplungselement 1 eingeführt wird, dass der Kolben 13 entgegen der Kraft der Kolbenfeder 25 in das Innere des ersten Kupplungselements 1 geschoben wird, wobei ab einer bestimmten Position die Druckhülse 7 durch den Kolben 13 in Richtung ihrer Öffnungsposition gedrängt wird.

Im in Fig. 2 dargestellten Betriebszustand des ersten Kupplungselements 1 wäre allerdings ein Einkuppeln des zweiten Kupplungselements 1a unmöglich, da der Druck im Strömungskanal 5 zu groß ist.

Fig. 3a zeigt einen Ausschnitt eines Ausführungsbeispiels eines Kupplungselements im Bereich des Ventilstößelkopfes 10. Die Dichtfläche 22 hat einen Neigungswinkel α von 0° (α in Fig. 3b nicht eingezeichnet), so dass die Dichtfläche 22 parallel zur Kupplungsachse A orientiert ist. Die Gegendichtfläche 34 der Druckhülse 7 weist einen Winkel β von 35° zur Kupplungsachse A auf, so dass die Druckhülse 7 im dargestellten Schließzustand lediglich an einer Kante der Dichtfläche 22 anliegt, wodurch eine vorteilhafte Abdichtung zwischen Druckhülse 7 und Ventilstößelkopf 10 realisiert ist. Ferner ist zur Abdichtung eine Dichtung 11 in einer Nut 12 im Ventilstößelkopf 10 des Ventilstößels 6 vorgesehen.

Fig. 3b zeigt einen Ausschnitt eines weiteren nicht im Rahmen der Erfindung liegenden Ausführungsbeispiels eines Kupplungselements 1 im Bereich des Ventilstößelkopfes 10 des Ventilstößels 10. Die Dichtfläche 22 weist einen Winkel α von 30° zur Kupplungsachse A auf, während die Gegendichtfläche 34 einen Winkel β von 35° zur Kupplungsachse A aufweist. Im dargestellten Schließzustand der Druckhülse 7 liegt die Druckhülse 7 folglich mit der Gegendichtfläche 34 lediglich an einer umlaufenden Kante der Dichtfläche 22 an. Zur weiteren Abdichtung ist ferner eine Dichtung 11 in einer Nut 12 vorgesehen.

Fig. 4 zeigt einen Ausschnitt des Ausführungsbeispiels gemäß Fig. 1 im Bereich der Nut 24 zur Befestigung des Ventilstößels 10. Die Stößelführung 23 ist in der Nut 24 angeordnet. Die Stößelführung 23 ist zwischen Innenkörper 8 und Anschlussteil 3 eingespannt. Die Dichtung 21 ist zwischen dem Innenkörper 8 und dem Anschlussteil angeordnet. Die Nut 24 weist zwei gegenüberliegende Nutflanken 35a und 35b auf, die über eine erste Fase 37 in den Nutgrund 36 übergehen. Durch die erste Fase 37 werden die Spannungen am Nutgrund 36 im Betriebszustand deutlich reduziert, wodurch die Betriebssicherheit gesteigert wird. Die erste Fase 37 ist jeweils - vorliegend entgegengesetzt - in einem Winkel von etwa 35° zur Kupplungsachse A geneigt und weist eine Breite von 0,45 mm auf.

Fig. 5 zeigt ein Ausführungsbeispiel eines Ventilstößels 6 für ein Kupplungselement 1. Dargestellt ist die Nut 24 mit den sich gegenüberliegenden Nutflanken 35a und 35b sowie dem Nutgrund 36. Im Übergang zwischen den Nutflanken 35a bzw. 35b ist neben der ersten Fase 37 eine zweite Fase 38 angeordnet, die sich unmittelbar an die erste Fase 37 anschließt. Die erste Fase 37 und die zweite Fase 38 haben einen unterschiedlichen Neigungswinkel zur Kupplungsachse A. Die erste Fase 37 schließt einen Winkel γ von 45° zur Kupplungsachse A ein, während die zweite Fase 38 einen Winkel δ von 30° zur Kupplungsachse A einschließt.

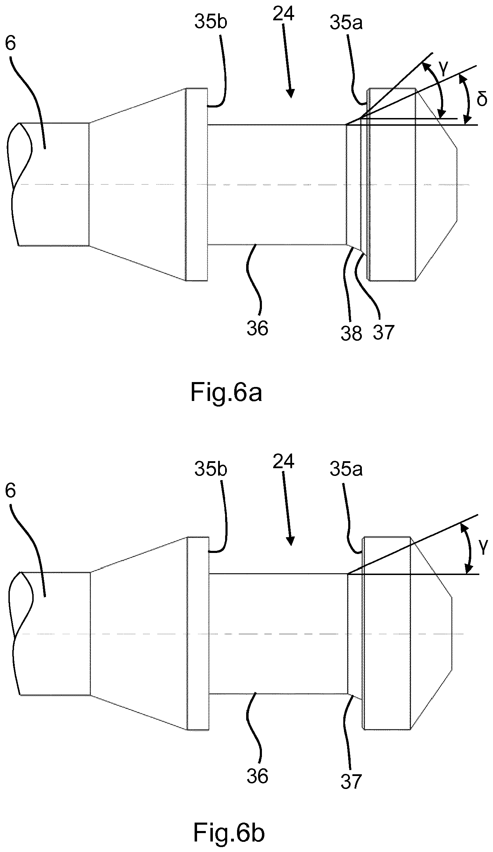

Fig. 6a zeigt ein Ausführungsbeispiel eines Ventilstößels 6 für ein Kupplungselement 1. Dargestellt ist die Nut 24 mit den sich gegenüberliegenden Nutflanken 35a und 35b sowie dem Nutgrund 36. Im Übergang zwischen der von dem - in Fig. 6a nicht dargestellten - Ventilstößelkopf 10 abgewandten Nutflanke 35a ist neben der ersten Fase 37 eine zweite Fase 38 angeordnet, die sich unmittelbar an die erste Fase 37 anschließt. Die erste Fase 37 und die zweite Fase 38 haben einen unterschiedlichen Neigungswinkel zur Kupplungsachse A bzw. zu der mit dieser zusammenfallenden Längsachse des Ventilstößels. Die erste Fase 37 schließt einen Winkel γ von 45° zur Kupplungsachse A ein, während die zweite Fase 38 einen Winkel δ von 30° zur Kupplungsachse A einschließt.

Fig. 6b zeigt ein Ausführungsbeispiel eines Ventilstößels 6 für ein Kupplungselement 1. Dargestellt ist die Nut 24 mit den sich gegenüberliegenden Nutflanken 35a und 35b sowie dem Nutgrund 36. Im Übergang zwischen der von dem - in Fig. 6b nicht dargestellten, aber auf der linken Seite befindlichen - Ventilstößelkopf 10 abgewandten Nutflanke 35a ist eine erste Fase 37 mit einem Winkel γ angeordnet. Die erste Fase 37 schließt einen Winkel γ von 45° zur Kupplungsachse A bzw. zu der mit dieser zusammenfallenden Längsachse des Ventilstößels 6 ein.

## Patentansprüche

1. Kupplungselement (1) für eine Kupplung zur Verbindung von Druckmittelleitungen, umfassend ein Gehäuse (2), einen Strömungskanal (5) für ein Druckmittel, einen Ventilstößel (6), eine Druckhülse (7) und einen Innenkörper (8), wobei das Gehäuse (2) eine Kupplungsachse A aufweist, wobei der Ventilstößel (6) derart in dem Gehäuse (2) gehalten ist, dass der Ventilstößel (6) im Strömungskanal (5) angeordnet ist, wobei der Ventilstößel (6) einen Ventilstößelkopf (10) aufweist, wobei die Druckhülse (7) den Ventilstößel (6) umgibt, wobei die Druckhülse (7) entlang der Kupplungsachse A verschiebbar zwischen einer Schließposition, in der der Strömungskanal (5) durch die Druckhülse (7) verschlossen wird, und einer Öffnungsposition, in der der Strömungskanal (5) durch die Druckhülse (7) freigegeben ist, gehalten ist, wobei die Druckhülse (7) in ihrer Schließposition unmittelbar an dem Ventilstößelkopf (10) anliegt, wodurch eine Kraft parallel zur Kupplungsachse A von der Druckhülse (7) auf den Ventilstößelkopf (10) wirkt, wobei der Innenkörper (8) und die Druckhülse (7) Mittel aufweisen, mit denen die von der Druckhülse (7) auf den Ventilstößelkopf (10) wirkende Kraft begrenzbar ist, wobei das Mittel am Innenkörper (8) als erster Anschlagbereich und das Mittel an der Druckhülse (7) als zweiter Anschlagbereich ausgebildet ist, wobei der erste Anschlagbereich und der zweite Anschlagbereich zur Begrenzung der Kraft zusammenwirken, wobei das Gehäuse (2) ein Anschlussteil (3) aufweist, das mit einem hülsenartig ausgebildeten Grundkörper (14) verschraubt ist, der gleichzeitig den Innenkörper (8) am Anschlussteil (3) festlegt, sodass der Innenkörper (8), innerhalb dessen die Druckhülse (7) geführt ist, zwischen Grundkörper (14) und Anschlussteil (3) verspannt ist, wobei zwischen Innenkörper (8) und dem Anschlussteil (3) eine Dichtung (21) angeordnet ist, **dadurch gekennzeichnet, dass** der Ventilstößelkopf (10) eine Dichtfläche (22) aufweist, die um einen Winkel (α) von 0° zur Kupplungsachse A geneigt ist, so dass die Dichtfläche (22) parallel zur Kupplungsachse A orientiert ist, und wobei die Druckhülse (7) eine Gegendichtfläche (34) aufweist, die um einen Winkel (β) zur Kupplungsachse A geneigt ist, wobei die Gegendichtfläche (34) in der Schließposition der Druckhülse (7) zumindest teilweise an der Dichtfläche anliegt, wobei der Winkel (β) zwischen 30° und 45° ist, sodass die Gegendichtfläche (34) an einer Kante der Dichtfläche (22) anliegt.

2. Kupplungselement (1) nach Anspruch 1, **dadurch gekennzeichnet, dass** der erste Anschlagbereich als erster Absatz (16) an dem Innenkörper (8) und der zweite Anschlagbereich als zweiter Absatz (17) an der Druckhülse (7) ausgebildet ist.

3. Kupplungselement (1) nach Anspruch 2, **dadurch gekennzeichnet, dass** der Innendurchmesser des ersten Absatzes (16) des Innenkörpers (8) kleiner als der Außendurchmesser des zweiten Absatzes (17) der Druckhülse (7) ist.

4. Kupplungselement (1) nach einem der Ansprüche 1 bis 3, **dadurch gekennzeichnet, dass** der erste Anschlagbereich und der zweite Anschlagbereich zumindest im drucklosen Schließzustand der Druckhülse (7) zueinander beabstandet sind.

5. Kupplungselement (1) nach einem der Ansprüche 1 bis 4, **dadurch gekennzeichnet, dass** der erste Anschlagbereich und der zweite Anschlagbereich zumindest ab einem vorbestimmten Druck innerhalb des Strömungskanals (5) durch eine druckabhängige Verformung des Ventilstößels (6) und/oder der Druckhülse (7) zur Anlage kommen.

6. Kupplungselement (1) nach einem der vorhergehenden Ansprüche, **dadurch gekennzeichnet, dass** der Ventilstößel (6) über ein Stößellager (23) am Gehäuse (2) gehalten ist, und dass das Stößellager (23) mindestens zwei Halbschalen umfasst.

7. Kupplungselement (1) nach Anspruch 6, **dadurch gekennzeichnet, dass** das Stößellager (23) in einer Nut (24) am Ventilstößel angeordnet ist, dass die Nut (24) zwei gegenüberliegende Nutflanken (35a, 35b) und einen Nutgrund (36) aufweist, und dass zwischen mindestens einer der Nutflanken (35a, 35b) und dem Nutgrund (36) mindestens eine erste Fase (37) mit einem Winkel (γ) zur Kupplungsachse A ausgebildet ist, insbesondere dass der Winkel (γ) zwischen 30° und 60° beträgt.

8. Kupplungselement (1) nach Anspruch 7, **dadurch gekennzeichnet, dass** zwischen der mindestens einen Nutflanke (35a) der Nutflanken (35a, 35b) und dem Nutgrund (36) zusätzlich mindestens eine zweite Fase (38) mit einem Winkel (δ) zur Kupplungsachse A ausgebildet ist, und dass sich die zweite Fase (38) ausgehend von der Nutflanke (35a) an die erste Fase (37) anschließt, insbesondere dass der Winkel (δ) zwischen 30° und 60° beträgt.

9. Kupplungselement (1) nach einem der vorhergehenden Ansprüche, **dadurch gekennzeichnet, dass** das Kupplungselement (1) als Kupplungsmuffe oder als Kupplungsstecker ausgebildet ist.

10. Kupplung, insbesondere Hydraulikkupplung, mit einem ersten Kupplungselement (1) und einem zweiten Kupplungselement, wobei das erste Kupplungselement (1) und das zweite Kupplungselement zur Verbindung einer Druckmittelleitung verbindbar sind, **dadurch gekennzeichnet, dass** das erste Kupplungselement (1) und/oder das zweite Kupplungselement nach einem der Ansprüche 1 bis 9 ausgebildet ist.

## Claims

1. Coupling element (1) for a coupling for connecting pressure medium lines comprising a housing (2), a flow channel (5) for a pressure medium, a valve tappet (6), a pressure sleeve (7) and an inner body (8), wherein the housing (2) has a coupling axis A, wherein the valve tappet (6) is held in the housing (2) in such a manner that the valve tappet (6) is arranged in the flow channel (5), wherein the valve tappet (6) has a valve tappet head (10), wherein the pressure sleeve (7) surrounds the valve tappet (6), wherein the pressure sleeve (7) is held displaceably along the coupling axis A between a closing position, in which the flow channel (5) is closed by the pressure sleeve (7) and an open position, in which the flow channel (5) is opened by the pressure sleeve (7), wherein the pressure sleeve (7) in its closing position directly rests against the valve tappet head (10), whereby a force acts parallel to the coupling axis A from the pressure sleeve (7) on the valve tappet head (10), wherein the inner body (8) and the pressure sleeve (7) comprise means, by means of which the force acting from the pressure sleeve (7) on the valve tappet head (10) can be limited, wherein the means on the inner body (8) is designed as a first stop area and the means on the pressure sleeve (7) is designed as a second stop area, wherein the first stop area and the second stop area cooperate to limit the force, wherein the housing (2) has a connecting part (3), which is screwed to a sleeve-like base body (14), which simultaneously fixes the inner body (8) to the connecting part (3), so that the inner body (8), within which the pressure sleeve (7) is guided, is braced between base body (14) and connecting part (3), wherein between inner body (8) and the connecting part (3) a seal (21) is arranged, **characterised in that** the valve tappet head (10) has a sealing surface (22), which is inclined by an angle (α) of 0° to the coupling axis A, so that the sealing surface (22) is oriented parallel to the coupling axis A and wherein the pressure sleeve (7) has a counter sealing surface (34), which is inclined by an angle (β) to the coupling axis A, wherein the counter sealing surface (34) in the closing position of the pressure sleeve (7) at least partially rests against the sealing surface, wherein the angle (β) is between 30° and 45°, so that the counter sealing surface (34) rests against an edge of the sealing surface (22).

2. Coupling element (1) according to claim 1, **characterised in that** the first stop area is formed as a first shoulder (16) on the inner body (8) and the second stop area is formed as a second shoulder (17) on the pressure sleeve (7).

3. Coupling element (1) according to claim 2, **characterised in that** the inner diameter of the first shoulder (16) of the inner body (8) is smaller than the outer diameter of the second shoulder (17) of the pressure sleeve (7).

4. Coupling element (1) according to one of claims 1 to 3, **characterised in that** the first stop area and the second stop area are spaced apart from each other, at least in the unpressurised closed state of the pressure sleeve (7).

5. Coupling element (1) according to one of claims 1 to 4, **characterised in that** the first stop area and the second stop area come into contact at least from a predetermined pressure within the flow channel (5) as a result of a pressure-dependent deformation of the valve tappet (6) and/or the pressure sleeve (7).

6. Coupling element (1) according to one of the previous claims, **characterised in that** the valve tappet (6) is held on the housing (2) via a tappet bearing (23) and that the tappet bearing (23) comprises at least two half shells.

7. Coupling element (1) according to claim 6, **characterised in that** the tappet bearing (23) is arranged in a groove (24) on the valve tappet, that the groove (24) has two opposite groove flanks (35a, 35b) and a groove base (36) and that at least one first chamfer (37) with an angle (γ) to the coupling axis A is formed between at least one of the groove flanks (35a, 35b) and the groove base (36), in particular that the angle (γ) is between 30° and 60°.

8. Coupling element (1) according to claim 7, **characterised in that** between the at least one groove flank (35a) of the groove flanks (35a, 35b) and the groove base (36) there is additionally formed at least one second chamfer (38) with an angle (δ) to the coupling axis A and that the second chamfer (38), starting from the groove flank (35a), joins the first chamfer (37), in particular that the angle (δ) is between 30° and 60°.

9. Coupling element (1) according to one of the previous claims, **characterised in that** the coupling element (1) is designed as a coupling sleeve or as a coupling plug.

10. Coupling, in particular hydraulic coupling, with a first coupling element (1) and a second coupling element, wherein the first coupling element (1) and the second coupling element are connectable to connect a pressure medium line, **characterised in that** the first coupling element (1) and/or the second coupling element is designed according to one of claims 1 to 9.

## Revendications

1. Élément d'accouplement (1) pour un accouplement destiné à relier des conduites de fluide sous pression, comprenant un corps (2), un conduit d'écoulement (5) d'un fluide sous pression, un poussoir (6) de vanne, une douille de compression (7) et un corps intérieur (8), sachant que le corps (2) présente un axe d'accouplement A, sachant que le poussoir (6) de vanne est maintenu dans le corps (2) de sorte que le poussoir (6) de vanne est disposé dans le conduit d'écoulement (5), sachant que le poussoir (6) de vanne présente une tête (10) du poussoir de vanne, sachant que la douille de compression (7) entoure le poussoir (6) de vanne, sachant que la douille de compression (7) est maintenue déplaçable le long de l'axe d'accouplement A entre une position de fermeture sur laquelle le conduit d'écoulement (5) est obturé par la douille de compression (7), et une position d'ouverture sur laquelle le conduit d'écoulement (5) est dégagé par la douille de compression (7), sachant que la douille de compression (7) applique, lorsque à l'état fermé, directement contre la tête (10) du poussoir de vanne, de sorte que parallèlement à l'axe d'accouplement A une force est transmise de la douille de compression (7) à la tête (10) du poussoir de vanne, sachant que le corps intérieur (8) et la douille de compression (7) présentent des moyens permettant de limiter la force exercée par la douille de compression (7) sur la tête (10) de poussoir de vanne, sachant que le moyen contre le corps intérieur (8) est configuré comme première zone de butée et le moyen contre la douille de compression (7) comme seconde zone de butée, sachant que la première zone de butée et la seconde zone de butée interagissent pour limiter la force, sachant que le corps (2) présente une pièce de raccordement (3) vissée avec un corps de base (14) configuré en forme de douille, qui immobilise en même temps le corps intérieur (8) contre la pièce de raccordement (3), de sorte que le corps intérieur (8), dans lequel est guidée la douille de compression (7), est serré entre le corps de base (14) et la pièce de raccordement (3), sachant qu'entre le corps intérieur (8) et la pièce de raccordement (3) est disposé un joint (21), **caractérisé en ce que** la tête (10) du poussoir de vanne présente une surface d'étanchéité (22) inclinée selon un angle (α) de 0° par rapport à l'axe d'accouplement A, de sorte que la surface d'étanchéité (22) est orientée parallèle à l'axe d'accouplement A, et sachant que la douille de compression (7) présente une surface d'étanchéité (34) antagoniste inclinée selon un angle (β) par rapport à l'axe d'accouplement A, sachant que la surface d'étanchéité (34) antagoniste applique au moins partiellement contre la surface d'étanchéité lorsque la douille de compression (7) se trouve en position fermée, sachant que l'angle (β) est compris entre 30° et 45°, de sorte que la surface d'étanchéité (34) antagoniste applique contre une arête de la surface d'étanchéité (22).

2. Élément d'accouplement (1) selon la revendication 1, **caractérisé en ce que** la première zone de butée est configurée comme premier épaulement (16) contre le corps intérieur (8), et la seconde zone de butée comme second épaulement (17) contre la douille de compression (7).

3. Élément d'accouplement (1) selon la revendication 2, **caractérisé en ce que** le diamètre intérieur du premier épaulement (16) du corps intérieur (8) est inférieur au diamètre extérieur du second épaulement (17) de la douille de compression (7).

4. Élément d'accouplement (1) selon l'une des revendications 1 à 3, **caractérisé en ce que** la première zone de butée et la seconde zone de butée se trouvent distantes l'une de l'autre au moins lorsque la douille de compression (7) se trouve à l'état fermé hors pression.

5. Élément d'accouplement (1) selon l'une des revendications 1 à 4, **caractérisé en ce que** la première zone de butée et la seconde zone de butée arrivent en applique au moins à partir d'une pression prédéfinie à l'intérieur du conduit d'écoulement (5), du fait d'une déformation, en fonction de la pression, du poussoir (6) de vanne et/ou de la douille de compression (7).

6. Élément d'accouplement (1) selon l'une des revendications précédentes, **caractérisé en ce que** le poussoir (6) de vanne est maintenu contre le corps (2) via un palier (23) de poussoir, et que le palier (23) de poussoir comprend au moins deux demi-coques.

7. Élément d'accouplement (1) selon la revendication 6, **caractérisé en ce que** le palier (23) de poussoir est disposé dans une gorge (24) contre le poussoir de vanne, que la gorge (24) présente deux flancs (35a, 35) et un fond (36) de gorge, et qu'entre au moins l'un des flancs (35a, 35b) de gorge et le fond (36) de gorge est configuré au moins un premier chanfrein (37) présentant un angle (γ) par rapport à l'axe d'accouplement A, notamment que l'angle (γ) est compris entre 30° et 60°.

8. Élément d'accouplement (1) selon la revendication 7, **caractérisé en ce qu'**entre au moins le flanc (35a) de gorge des flancs (35a, 35b) de gorge, et le fond (36) de gorge, est configuré en plus au moins un second chanfrein (38) présentant un angle (δ) par rapport à l'axe d'accouplement A, et que le second chanfrein (38), partant du flanc (35a) de gorge se raccorde au premier chanfrein (37), notamment que l'angle (δ) est compris entre 30° et 60°.

9. Élément d'accouplement (1) selon l'une des revendications précédentes, **caractérisé en ce que** l'élément d'accouplement (1) est configuré en manchon d'accouplement ou comme connecteur d'accouplement.

10. Accouplement, notamment accouplement hydraulique, comprenant un premier élément d'accouplement (1) et un second élément d'accouplement, sachant que le premier élément d'accouplement (1) et le second élément d'accouplement sont reliables entre eux pour relier une conduite de fluide sous pression, **caractérisé en ce que** le premier élément d'accouplement (1) et/ou le second élément d'accouplement est/sont configuré(s) selon l'une des revendications 1 à 9.
